# FASCICULE DE BREVET EUROPEEN

(11) **EP 2 641 132 B1**
(45) Date de publication et mention de la délivrance du brevet: **18.04.2018**
(21) Numéro de dépôt: 11785009.9
(22) Date de dépôt: 17.11.2011
(51) Int. Cl.: G04B 18/02, G04B 17/06, G04D 7/08, G04D 7/10, G01M 1/00

(54) **PROCEDE D'AJUSTEMENT DE FREQUENCE D'OSCILLATION D'UN SOUS-ENSEMBLE D'HORLOGERIE**
VERFAHREN ZUR EINSTELLUNG DER OSZILLATIONSFREQUENZ EINER BAUGRUPPE EINES UHRWERKS
METHOD OF SETTING THE OSCILLATION FREQUENCY OF A CLOCKWORK SUBASSEMBLY

(30) Priorité: 18.11.2010 EP 10191646
(43) Date de publication de la demande: 25.09.2013
(73) Titulaire: Nivarox-FAR S.A., 2400 Le Locle (CH)
(72) Inventeur: VERARDO, Marco, CH-2336 Les Bois (CH); BARTHOULOT, Philippe, F-25120 Maiche (FR)
(74) Mandataire: Giraud, Eric
(86) Numéro de dépôt international: PCT/EP2011/070384
(87) Numéro de publication internationale: WO 2012/066094

(56) Documents cités:
- EP-A1- 2 128 723
- WO-A1-2012/007460
- CH-A- 347 491
- CH-A- 390 808
- CH-A- 542 469
- CH-D- 1 283 368
- FR-A- 893 305
- FR-A- 1 589 411
- US-A1- 2002 070 203

## Description

### Domaine de l'invention

L'invention concerne un procédé d'ajustement de fréquence d'oscillation, à une fréquence d'oscillation prédéterminée, d'un ensemble réglant d'horlogerie sans raquetterie composé d'un balancier et d'un ensemble spiral comportant au moins un spiral avec au moins un vrillage.

L'invention concerne encore une pièce d'horlogerie comportant au moins un organe réglant.

L'invention concerne, de façon générale, le domaine de la micromécanique, et plus particulièrement le domaine de l'horlogerie.

Tout particulièrement l'invention concerne les ajustements et réglages d'organes-réglants, et en particulier des balanciers de montres ou de pièces d'horlogerie, ou des ensembles balancier-spiral de montres ou de pièces d'horlogerie.

### Arrière plan de l'invention

Malgré l'extrême précision des usinages et leur grande reproductibilité, des ajustements doivent presque toujours être opérés, soit lors d'une opération d'assemblage, soit, plus fréquemment, lors d'une opération de réglage ou de mise au point, en particulier pour un réglage de balourd et un ajustement d'inertie dans le cas des pièces mobiles, et un réglage de fréquence dans le cas d'un oscillateur.

C'est en particulier au stade assemblé qu'il est nécessaire de parfaire l'appairage de certains composants qui, pris indépendamment, sont dans les tolérances d'usinage ou de réalisation, mais qui ne peuvent être assemblés purement et simplement en raison des contraintes de service propre au sous-ensemble ou à l'ensemble monté.

C'est en particulier le cas des organes réglants des pièces d'horlogerie, et tout particulièrement des ensembles balancier-spiral. Il apparaît en effet que les réglages de balourd et d'ajustement d'inertie, tant statique que dynamique, sont déjà très délicats au stade des composants individuels, et que ces opérations de mise au point se révèlent extrêmement complexes quand les composants sont assemblés entre eux. En particulier les réglages dynamiques se révèlent délicats à mettre en oeuvre.

Pour l'ajustement d'un sous-ensemble balancier-spiral, on connaît différentes techniques, dont deux sont plus couramment appliquées.

Le système dit « Omégamétrique » consiste à effectuer :
- un classage des spiraux ;
- un classage des balanciers ;
- un appairage d'un balancier choisi dans une classe particulière, avec un spiral choisi lui aussi dans une classe particulière, ces classes étant compatibles entre elles.

Ce procédé impose un important stock des composants et des classes relativement larges.

En alternative on connaît le système dit « Spiromatic » :
- on assemble en général un spiral sur un balancier ;
- on coupe ce spiral à la bonne longueur, pour l'obtention d'un couple adapté à l'inertie du balancier

Ce procédé ne permet pas de garantir avec précision la position terminale du ressort, d'où perte de performance chronométrique.

Ces techniques classiques sont, soit coûteuses, soit médiocres quant à la précision des résultats obtenus.

Le document WO 2012/007460 au nom de ETA Manufacture Horlogère Suisse décrit un pocédé d'ajustement de fréquence d'oscillation d'un ensemble balancier-spiral, par lequel on effectue un enlèvement ou/et un ajout ou/et un déplacement de matière sur au moins un composant dudit ensemble, sous l'effet d'une impulsion d'un moyen de transformation, pour réaliser un micro-usinage ou/et une microfusion de la matière dudit composant ou d'un matériau d'apport, pour vaporiser ou/et déplacer ou/et souder ladite matière, on commande ladite impulsion par des moyens de pilotage agencés pour générer, séquencer, interrompre toute impulsion, et pour piloter les mouvements d'un faisceau issu dudit moyen de transformation, lesdits moyens de pilotage étant raccordés ou asservis à des moyens de mesure ou de comparaison.

### Résumé de l'invention :

L'invention se propose de pallier les limites de l'art antérieur, en proposant un procédé simple, efficace, et précis, de constitution, et d'ajustement de caractéristiques physiques d'un composant ou d'un sous-ensemble de pièce d'horlogerie, notamment aux fins d'ajustement d'inertie ou/et d'équilibrage ou/et d'ajustement de fréquence. Dans le cas d'un sous-ensemble, il s'agit d'un sous-ensemble mobile en pivotement, comportant d'une part au moins un premier composant et d'autre part au moins un deuxième composant, l'un desdits composants comportant des moyens de rappel agencés pour exercer un couple de rappel élastique, autour dudit axe de pivotement, sur au moins un autre desdits composants.

En particulier l'invention concerne un procédé d'ajustement d'un sous-ensemble balancier-spiral d'horlogerie, sans raquetterie, avec une très bonne performance chronométrique.

Selon l'invention, ce procédé d'ajustement de fréquence d'oscillation, à une fréquence d'oscillation prédéterminée, d'un ensemble réglant d'horlogerie sans raquetterie composé d'un balancier et d'un ensemble spiral comportant au moins un spiral avec au moins un vrillage, caractérisé en ce que :
- on prélève au hasard un ensemble spiral particulier parmi une production tolérancée;
- on mesure le couple de rappel dudit ensemble spiral ;
- on prélève au hasard un balancier particulier parmi une production tolérancée ;
- on calcule une inertie théorique dudit balancier particulier pour l'atteinte de ladite fréquence d'oscillation prédéterminée, en fonction dudit couple de rappel mesuré dudit spiral prélevé;
- on mesure l'inertie réelle dudit balancier particulier;
- on corrige, par action directe sur la serge ou/et sur au moins un bras que comporte ledit balancier particulier, l'inertie dudit balancier particulier à ladite valeur d'inertie théorique calculée pour l'obtention de ladite fréquence d'oscillation prédéterminée dudit ensemble réglant constitué par ledit balancier particulier, et par ledit ensemble spiral particulier.

Selon une caractéristique de l'invention, on prélève ledit balancier particulier parmi une production dans laquelle l'inertie de chaque balancier par rapport à son axe de pivotement est tolérancée par rapport à une inertie seuil préalablement définie.

Selon une caractéristique de l'invention, on laisse inchangé le point de fixation dudit ensemble spiral particulier, lequel reste à une longueur active définie lors de sa production propre en tant que composant nu.

Selon une caractéristique de l'invention, on corrige localement l'inertie dudit balancier particulier vers le moins par enlèvement de matière, par ablation à l'aide d'une source d'énergie distante de la surface dudit balancier particulier.

Selon une caractéristique de l'invention, on corrige localement l'inertie dudit balancier particulier vers le plus par ajout de matière, par projection à distance de la surface dudit balancier particulier.

Selon une caractéristique de l'invention, on corrige localement l'inertie dudit balancier particulier vers le plus ou vers le moins par déplacement de matière, par repoussage ou par fusion localisée et déplacement de la phase liquide résultant de ladite fusion.

Selon une caractéristique de l'invention, on équipe ledit balancier particulier de masselottes de réglage en service, qui sont fixées sur ledit balancier particulier dans une position de butée ou d'indexation dans laquelle elles sont maintenues fixes pendant chaque opération de mesure d'inertie dudit balancier particulier et pendant chaque opération de correction d'inertie dudit balancier particulier.

Selon une caractéristique de l'invention, on corrige l'inertie dudit balancier particulier sur ledit balancier particulier isolé dudit ensemble spiral particulier.

Selon une caractéristique de l'invention, on corrige l'inertie dudit balancier particulier sur ledit balancier particulier assemblé avec ledit ensemble spiral particulier.

Selon une caractéristique de l'invention, on corrige l'inertie dudit balancier particulier pendant un pivotement imprimé à ce dernier par des moyens d'entraînement.

L'invention concerne encore une pièce d'horlogerie comportant au moins un organe réglant, caractérisée en ce que ledit au moins un organe réglant est un ensemble réglant d'horlogerie sans raquetterie composé d'un balancier et d'un ensemble spiral comportant au moins un spiral, ledit balancier étant ajusté audit ensemble spiral selon le procédé selon l'une des revendications précédentes.

Selon une caractéristique de l'invention, ledit au moins un organe réglant est un ensemble réglant d'horlogerie sans raquetterie composé uniquement d'un balancier et d'un ensemble spiral comportant au moins un spiral, ledit balancier étant ajusté audit ensemble spiral selon un tel procédé.

Selon une caractéristique de l'invention, ledit ensemble réglant sans raquetterie est uniquement composé d'un balancier monobloc et d'un ensemble spiral comportant au moins un spiral, les seuls organes mobiles dudit ensemble réglant étant constitués par ledit balancier et par ledit ensemble spiral.

Selon une autre caractéristique de l'invention, on ledit ensemble réglant sans raquetterie est uniquement composé d'un balancier monobloc et d'un ensemble spiral comportant au moins un spiral ainsi que d'un jeu de masselottes de réglage en service fixées sur ledit balancier dans une position de butée ou d'indexation dans laquelle elles sont maintenues fixes pendant chaque opération de mesure d'inertie dudit balancier et pendant chaque opération de correction d'inertie dudit balancier, et les seuls organes mobiles dudit ensemble réglant étant constitués par ledit balancier, ledit ensemble spiral, et lesdites masselottes de réglage en service.

### Description détaillée des modes de réalisation préférés :

L'invention concerne, de façon générale, le domaine de la micromécanique, et plus particulièrement le domaine de l'horlogerie.

Tout particulièrement l'invention concerne les ajustements et réglages d'organes-réglants, et en particulier des balanciers de montres ou de pièces d'horlogerie, ou des ensembles balancier-spiral de montres ou de pièces d'horlogerie.

En particulier l'invention concerne un procédé d'ajustement de fréquence d'oscillation, à une fréquence d'oscillation prédéterminée, d'un ensemble réglant d'horlogerie sans raquetterie composé d'un balancier et d'un ensemble spiral comportant au moins un spiral avec au moins un vrillage, caractérisé en ce que :
- on prélève au hasard un ensemble spiral particulier parmi une production tolérancée;
- on mesure le couple de rappel de cet ensemble spiral ;
- on prélève au hasard un balancier particulier parmi une production tolérancée ;
- on calcule une inertie théorique IT de ce balancier particulier pour l'atteinte de la fréquence d'oscillation prédéterminée, en fonction du couple de rappel mesuré du spiral prélevé;
- on mesure l'inertie réelle IR de ce balancier particulier;
- on corrige, par action directe sur la serge ou/et sur au moins un bras que comporte ce balancier particulier, l'inertie de ce balancier particulier à la valeur d'inertie théorique IT calculée pour l'obtention de la fréquence d'oscillation prédéterminée de l'ensemble réglant constitué par ce balancier particulier, et par cet ensemble spiral particulier.

De préférence, on prélève le balancier particulier parmi une production dans laquelle l'inertie de chaque balancier par rapport à son axe de pivotement est supérieure est tolérancée par rapport à une inertie seuil préalablement définie.

Dans une variante particulière de mise en oeuvre de l'invention, non limitative, cette inertie est supérieure à une valeur seuil d'inertie IS.

Avantageusement, on laisse inchangé le point de fixation de cet ensemble spiral particulier, lequel reste à une longueur active définie lors de sa production propre en tant que composant nu.

Dans une mise en oeuvre avantageuse du procédé :
- on détermine l'axe de balourd AB et la valeur de balourd ΔB du balancier particulier et la position du balourd sur cet axe de balourd AB, de façon à définir, de part et d'autre de l'axe de pivotement AP du balancier particulier :
   - un premier domaine D1 du côté du balourd,
   - et un deuxième domaine D2 du côté opposé au balourd,
- on corrige l'inertie de ce balancier particulier de façon symétrique par rapport à l'axe de pivotement du balancier particulier, en créant au moins une zone où une quantité élémentaire de matière est ajoutée ou enlevée, chaque telle zone située dans le premier domaine D1 étant dite première zone et correspondant à une première variation algébrique de masse M1, chaque zone située dans le deuxième domaine D2 étant dite deuxième zone et correspondant à une deuxième variation algébrique de masse M2j,
   de façon à ce que :
   - la différence entre :
      - d'une part la somme par intégration des moments d'inertie rapportés à l'axe de balourd AB des deuxièmes variations algébriques de masse M2j, et
      - d'autre part la somme par intégration des moments d'inertie rapportés à l'axe de balourd AB desdites premières variations algébriques de masse M1i,
      soit égale à la valeur de balourd ΔB,
   et de façon à ce que :
   - la différence entre :
      - d'une part la somme par intégration des moments d'inertie rapportés à un axe perpendiculaire à l'axe de balourd AB et passant par l'axe de pivotement des deuxièmes variations algébriques de masse M2j, et
      - d'autre part la somme par intégration des moments d'inertie rapportés à un axe perpendiculaire à l'axe de balourd AB et passant par l'axe de pivotement des premières variations algébriques de masse M1i,
      soit égale à zéro,
   et encore de façon à ce que :
   - la somme entre :
      - d'une part la somme par intégration des moments d'inertie rapportés à l'axe de balourd AB des deuxièmes variations algébriques de masse M2j, et
      - d'autre part la somme par intégration des moments d'inertie rapportés à l'axe de balourd AB des premières variations algébriques de masse M1i,
   soit égale à la différence entre l'inertie réelle IR et l'inertie théorique IT.

Dans une réalisation particulière, on crée de telles zones où une quantité élémentaire de matière est ajoutée ou enlevée, alignées deux à deux de façon sensiblement symétrique par rapport à l'axe de pivotement du balancier particulier.

Dans une réalisation particulière, on crée une pluralité de zones d'ajout ou d'enlèvement de matière, toutes alignées sur l'axe de balourd AB.

Dans une réalisation particulière, on détermine l'axe de balourd AB et la valeur de balourd ΔB du balancier particulier, et on corrige le balourd de ce balancier, puis on ajuste son inertie par rapport à son axe de pivotement.

Dans une autre réalisation particulière, on détermine l'axe de balourd AB et la valeur de balourd ΔB du balancier particulier, et on corrige le balourd de ce balancier particulier pendant qu'on ajuste son inertie par rapport à son axe de pivotement.

Dans une autre réalisation particulière encore, on détermine l'axe de balourd AB et la valeur de balourd ΔB du balancier particulier, et, au cours de la correction d'inertie du balancier particulier, on effectue au moins une correction d'ébauche de façon à rapprocher l'inertie réelle du balancier particulier de l'inertie théorique IT calculée, et lors de laquelle correction d'ébauche on procède à l'élimination du balourd ΔB du balancier particulier pour son équilibrage, puis on effectue au moins une nouvelle mesure de l'inertie du balancier particulier, et une correction finale d'inertie du balancier particulier pour l'ajuster à la valeur de l'inertie théorique IT calculée.

Dans une réalisation particulière, on corrige localement l'inertie du balancier particulier vers le moins par enlèvement de matière, par ablation à l'aide d'une source d'énergie distante de la surface du balancier particulier.

Dans une réalisation particulière, on corrige localement l'inertie du balancier particulier vers le plus par ajout de matière, par projection à distance de la surface du balancier particulier.

Dans une réalisation particulière, on corrige localement l'inertie du balancier particulier vers le plus ou vers le moins par déplacement de matière, par repoussage ou par fusion localisée et déplacement de la phase liquide résultant de cette fusion.

Dans une réalisation particulière, on équipe le balancier particulier de masselottes de réglage en service, qui sont fixées sur ce balancier particulier dans une position de butée ou d'indexation dans laquelle elles sont maintenues fixes pendant chaque opération de mesure d'inertie du balancier particulier et pendant chaque opération de correction d'inertie du balancier particulier.

Dans une réalisation particulière, on immobilise chaque telle masselotte par un collage réversible pendant toute la durée du procédé, et jusqu'à l'insertion du balancier particulier dans un mouvement d'horlogerie.

Dans une réalisation particulière, on corrige l'inertie du balancier particulier sur le balancier particulier isolé de l'ensemble spiral particulier.

Dans une autre réalisation particulière, on corrige l'inertie du balancier particulier sur le balancier particulier assemblé avec cet ensemble spiral particulier.

Dans une réalisation particulière, on corrige l'inertie du balancier particulier pendant un pivotement imprimé à ce dernier par des moyens d'entraînement.

Dans une réalisation particulière, on effectue la correction d'inertie du balancier particulier sous la forme de marquages anti-contrefaçon de traçabilité de produit qui sont symétriques deux à deux par rapport à l'axe de pivotement du balancier particulier.

Dans une réalisation particulière, au cours de la correction d'inertie du balancier particulier, on effectue sur ce balancier particulier le marquage d'une référence de traçabilité de produit propre au spiral particulier par rapport auquel le balancier particulier est ajusté.

Dans une réalisation particulière, on effectue ce marquage de traçabilité de produit sous la forme d'un code-barres ou d'un code bidimensionnel matriciel à haute densité.

L'invention concerne encore un mouvement ou une pièce d'horlogerie comportant au moins un organe réglant.

Selon l'invention, cet au moins un organe réglant est un ensemble réglant d'horlogerie sans raquetterie composé d'un balancier et d'un ensemble spiral comportant au moins un spiral, ce balancier étant ajusté à cet ensemble spiral selon ce procédé.

Dans une réalisation particulière, cet au moins un organe réglant est un ensemble réglant d'horlogerie sans raquetterie composé uniquement d'un balancier et d'un ensemble spiral comportant au moins un spiral, ce balancier étant ajusté à cet ensemble spiral selon ce procédé.

Dans une réalisation particulière, cet au moins un ensemble réglant sans raquetterie est uniquement composé d'un balancier monobloc et d'un ensemble spiral comportant au moins un spiral, les seuls organes mobiles de cet ensemble réglant étant constitués par ce balancier et par cet ensemble spiral.

Dans une autre réalisation particulière, cet ensemble réglant sans raquetterie est uniquement composé d'un balancier monobloc et d'un ensemble spiral comportant au moins un spiral ainsi que d'un jeu de masselottes de réglage en service fixées sur le balancier dans une position de butée ou d'indexation dans laquelle elles sont maintenues fixes pendant chaque opération de mesure d'inertie du balancier et pendant chaque opération de correction d'inertie du balancier, et les seuls organes mobiles de l'ensemble réglant sont constitués par le balancier, l'ensemble spiral, et les masselottes de réglage en service.

L'invention permet l'ajustement d'un sous-ensemble balancier-spiral d'horlogerie avec une très bonne performance chronométrique.

L'invention permet, plus généralement, de mettre au point un procédé d'ajustement de caractéristiques physiques, ou/et de balourd, ou/et d'inertie, ou/et de fréquence d'oscillation, d'un composant, et, de préférence, d'un composant ou d'un sous-ensemble mobile en pivotement autour d'un axe de pivotement.

Dans le cas d'un sous-ensemble, il s'agit d'un sous-ensemble mobile en pivotement, comportant d'une part au moins un premier composant et d'autre part au moins un deuxième composant, l'un desdits composants comportant des moyens de rappel agencés pour exercer un couple de rappel élastique, autour dudit axe de pivotement, sur au moins un autre desdits composants.

En somme, selon l'invention, ce procédé d'ajustement en fréquence d'un sous-ensemble mobile en pivotement autour d'un axe de pivotement, comportant d'une part au moins un premier composant et d'autre part au moins un deuxième composant, ce au moins un premier composant comportant des moyens de rappel agencés pour exercer un couple de rappel élastique, autour de cet axe de pivotement, sur le deuxième composant, consiste à :
- mesurer le couple de rappel de ce au moins un premier composant, ou le couple résultant des premiers composants s'il y en a une pluralité, et mesurer l'inertie du deuxième composant ;
- puis à corriger l'inertie du deuxième composant ou/et à corriger le couple de rappel du au moins un premier composant, ou le couple résultant des premiers composants s'il y en a une pluralité.

Dans une mise en oeuvre préférée de l'invention, uniquement décrite ici en détail, on renonce à corriger le couple de rappel du au moins premier composant, que l'on extrait au hasard parmi une production tolérancée capable de la fréquence d'oscillation visée en combinaison avec une deuxième composant de la valeur théorique ad hoc. Et de ce fait, il suffit, très avantageusement, d'effectuer les opérations mécaniques d'ajustement sur un seul composant, le plus facile à usiner ou à transformer.

Cette correction d'inertie ou/et de couple de rappel est faite selon des tolérances propres au fonctionnement du sous-ensemble concerné.

Naturellement, chacun des premiers composants et deuxièmes composants peut être constitué sous la forme d'un sous-ensemble élémentaire, et les corrections, selon le cas, d'inertie, ou/et de couple de rappel, peuvent être appliquées à certains composants élémentaires de tels sous-ensembles élémentaires, qui sont choisis pour la facilité de mise en oeuvre de ces corrections, par exemple pour leur usinabilité, leur déformabilité, leur aptitude à recevoir un traitement thermique ou de surface, pour leurs propriétés de mémoire de forme, pour leur densité, ou pour toute autre caractéristique ou propriété physique autorisant une correction aisée et précise.

Dans un exemple particulier et préféré d'application de l'invention, le premier composant est un spiral d'horlogerie, et le deuxième composant est un balancier d'horlogerie. Les corrections peuvent alors avantageusement être appliquées, dans le premier cas à des spires ou zones préparées à cet effet, ou dans le deuxième cas à des masselottes, vis réglantes, goupilles ou similaire, ces exemples n'étant nullement exhaustifs.
Dans un mode particulier de mise en oeuvre du procédé, on l'applique à une pluralité de deuxièmes composants, qui pivotent autour du même axe de pivotement. Dans ce cas, au lieu de corriger l'inertie d'un seul deuxième composant, on corrige l'inertie cumulée de la pluralité de ces deuxièmes composants. Selon le cas d'espèce, on peut répartir la correction d'inertie sur les différents deuxièmes composants, ou adopter une autre règle, par exemple en fonction de la facilité de mise en oeuvre de la technique de correction choisie, sur l'un ou l'autre deuxième composant. Selon une règle préférée, on corrige la pluralité des deuxièmes composants, de façon à ce que leur centre d'inertie reste sur l'axe de pivotement.
Dans un mode préféré de mise en oeuvre de l'invention, seul décrit ci-dessus, on choisit de corriger l'inertie du deuxième composant. Dans un autre mode de mise en oeuvre de l'invention, on peut choisir de corriger le couple de rappel du premier composant, ou le couple résultant des premiers composants s'il y en a une pluralité. Dans ce dernier cas, selon le cas d'espèce, on peut répartir la correction du couple de rappel sur les différents premiers composants, ou adopter une autre règle, par exemple en fonction de la facilité de mise en oeuvre de la technique de correction choisie, sur l'un ou l'autre premier composant. Selon une règle préférée, on corrige la pluralité des premiers composants, de façon à ce que au moins leur centre de gravité, et si possible leur centre d'inertie, reste sur l'axe de pivotement. Dans un autre mode encore de mise en oeuvre de l'invention, on choisit de corriger à la fois, l'inertie du deuxième composant, et le couple de rappel du au moins un premier composant.
Pour réduire l'inertie du deuxième composant, différents moyens sont possibles, et cumulables entre eux :
- on corrige l'inertie du deuxième composant vers le moins par enlèvement de matière ou/et par déplacement de matière, ou/et
- on corrige l'inertie du deuxième composant vers le moins par enlèvement de matière, ou/et
- on corrige l'inertie du deuxième composant vers le moins par déplacement de matière.
Pour augmenter l'inertie du deuxième composant, différents moyens sont possibles, et cumulables entre eux :
- on corrige l'inertie du deuxième composant vers le plus par ajout de matière ou/et par déplacement de matière, ou/et
- on corrige l'inertie du deuxième composant vers le plus par ajout de matière, ou/et
- on corrige l'inertie du deuxième composant vers le plus par déplacement de matière.

Naturellement, ces corrections d'inertie peuvent aussi, s'il en est besoin, être combinées avec des corrections d'axe principal d'inertie, et des reprises de balourd. Quand le deuxième composant est déjà équilibré, dans des tolérances convenables d'équilibrage statique ou/et dynamique, on effectue de préférence les corrections d'inertie de façon équilibrée, ou symétrique selon le cas.

De façon similaire, selon l'invention, on pourrait corriger le couple de rappel du au moins un premier composant par enlèvement de matière ou/et par ajout de matière ou/et par déplacement de matière. On peut, encore, avantageusement, modifier ce couple de rappel par un traitement thermique local ou total, sans enlèvement de matière. Cette technologie est avantageuse dans le cas où le au moins un premier composant est un spiral d'horlogerie, et le deuxième composant un balancier d'horlogerie, en effet un tel traitement peut être effectué au stade assemblé du balancier-spiral.

De façon commune aux interventions de correction effectuées sur le premier ou sur le deuxième composant, on peut effectuer l'enlèvement de matière par usinage à l'outil, par exemple par fraisage, tournage, perçage, rectification, ou autre.

On peut également effectuer cet enlèvement de matière par ablation à l'aide d'une source d'énergie distante de la surface du deuxième composant, ou du premier composant selon le cas, par laser, microlaser, nanolaser, picolaser, femtolaser, électro-érosion, ou autre.

Naturellement ces différents types d'enlèvement de matière peuvent être combinés, et leur choix dépend surtout de la morphologie du composant et de son accessibilité, soit en statique, soit en dynamique quand on souhaite effectuer les corrections d'inertie ou de couple sur un composant ou un sous-ensemble en mouvement.

Concernant l'alternative où l'on rajoute de la matière, sur le premier composant ou sur le deuxième composant, on peut effectuer l'ajout de matière par projection à distance de la surface du deuxième composant. Cette projection peut être faite avec tout matériau d'adhérence convenable par rapport à la surface réceptrice, et ce matériau d'apport peut notamment être un métal, un alliage, une colle, une encre, une résine, ou autre.

Le vecteur de la projection peut être mécanique, tel qu'une tête d'impression ou de jetting, ou encore être constitué par une torche plasma, ou autre.
Naturellement il est possible de cumuler des opérations d'ajout, d'enlèvement, de déplacement de matière, ce qui peut être nécessaire en fonction de la finesse des opérations d'ajout, d'enlèvement, de déplacement.
Concernant ce dernier, on peut effectuer le déplacement de matière par déformation ou par repoussage, ou autre.
On peut aussi effectuer le déplacement de matière par fusion localisée et déplacement de la phase liquide résultant de cette fusion. En particulier si le composant concernée est en mouvement, par exemple de pivotement, il est avantageux d'utiliser par exemple la force centrifuge pour déplacer un flux de matière en l'éloignant de l'axe de pivotement.
On peut ainsi appliquer le procédé à un tel deuxième composant qui est un un balancier d'horlogerie comportant une serge périphérique et mobile en pivotement autour d'un axe de balancier, pour corriger son inertie.
On peut également appliquer ce procédé à un tel premier composant qui est un spiral comportant des moyens de rappel agencés pour exercer un couple de rappel élastique, pour corriger son couple de rappel. Cette disposition offre alors l'avantage de modifier le couple du spiral, par la mise en oeuvre des techniques citées ci-dessus, tout en conservant la longueur du spiral, ce qui pallie les inconvénients de l'art antérieur.
La maîtrise de la production tolérancée, d'une part des premiers composants, et d'autre part des deuxièmes composants, est essentielle pour autoriser la réalisation aisée du réglage d'ajustement à moindre coût :
- possibilité de n'agir que sur un seul composant, de préférence le deuxième composant ;
- ampleur des corrections en masse à effectuer, en balourd et en inertie, très faible du fait de l'étroitesse des tolérances des composants nus.
En somme, l'invention permet de s'affranchir du triage par classes des composants, et surtout du stock associé, qui représente une forte immobilisation financière. Elle autorise la constitution facile d'un sous-ensemble dans les tolérances statiques et dynamiques requises.
Quand elle est appliquée à un ensemble réglant horloger, elle garantit son ajustement parfait en fréquence. Il devient de ce fait inutile de conserver une raquetterie pour jouer sur le point d'attache du spiral.

C'est pourquoi l'invention, très avantageusement, est décrite ici pour son application préférée à un ensemble balancier-spiral sans raquetterie.

## Revendications

1. Procédé d'ajustement de fréquence d'oscillation, à une fréquence d'oscillation prédéterminée, d'un ensemble réglant d'horlogerie, dit sans raquetterie, uniquement composé d'un balancier et d'un ensemble spiral comportant au moins un spiral avec au moins un vrillage, les seuls organes mobiles dudit ensemble réglant étant constitués par ledit balancier et par ledit ensemble spiral, dans lequel.
- on prélève au hasard un ensemble spiral particulier parmi une production tolérancée;
- on mesure le couple de rappel dudit ensemble spiral ;
- on prélève au hasard un balancier particulier parmi une production tolérancée, dans laquelle l'inertie de chaque balancier par rapport à son axe de pivotement est tolérancée par rapport à une inertie préalablement définie, et est supérieure à une valeur seuil d'inertie (IS);
- on calcule une inertie théorique (IT) dudit balancier particulier pour l'atteinte de ladite fréquence d'oscillation prédéterminée, en fonction dudit couple de rappel mesuré dudit spiral prélevé;
- on mesure l'inertie réelle (IR) dudit balancier particulier;
- on corrige, par action directe sur la serge ou/et sur au moins un bras que comporte ledit balancier particulier, l'inertie dudit balancier particulier à ladite valeur d'inertie théorique (IT) calculée pour l'obtention de ladite fréquence d'oscillation prédéterminée dudit ensemble réglant constitué par ledit balancier particulier, et par ledit ensemble spiral particulier:
- on détermine l'axe de balourd (AB) et la valeur de balourd (ΔB) dudit balancier particulier et la position dudit balourd sur ledit axe de balourd (AB), de façon à définir, de part et d'autre de l'axe de pivotement (AP) dudit balancier particulier :
- un premier domaine (D1) du côté dudit balourd,
- et un deuxième domaine (D2) du côté opposé audit balourd,
- on corrige l'inertie dudit balancier particulier de façon symétrique par rapport à l'axe de pivotement dudit balancier particulier, en créant au moins une zone où une quantité élémentaire de matière est ajoutée ou enlevée, chaque dite zone située dans ledit premier domaine (D1) étant dite première zone et correspondant à une première variation algébrique de masse (M1i), chaque dite zone située dans ledit deuxième domaine (D2) étant dite deuxième zone et correspondant à une deuxième variation algébrique de masse (M2j),
de façon à ce que :
- la différence entre :
- d'une part la somme par intégration des moments d'inertie rapportés audit axe de balourd (AB) desdites deuxièmes variations algébriques de masse (M2j), et
- d'autre part la somme par intégration des moments d'inertie rapportés audit axe de balourd (AB) desdites premières variations algébriques de masse (M1i),
soit égale à ladite valeur de balourd (ΔB),
et de façon à ce que :
- la différence entre :
- d'une part la somme par intégration des moments d'inertie rapportés à un axe perpendiculaire audit axe de balourd (AB) et passant par ledit axe de pivotement desdites deuxièmes variations algébriques de masse (M2j), et
- d'autre part la somme par intégration des moments d'inertie rapportés à un axe perpendiculaire audit axe de balourd (AB) et passant par ledit axe de pivotement desdites premières variations algébriques de masse (M1 i),
soit égale à zéro,
et encore de façon à ce que :
- la somme entre :
- d'une part la somme par intégration des moments d'inertie rapportés audit axe de balourd (AB) desdites deuxièmes variations algébriques de masse (M2j), et
- d'autre part la somme par intégration des moments d'inertie rapportés audit axe de balourd (AB) desdites premières variations algébriques de masse (M1i),
soit égale à la différence entre ladite inertie réelle (IR) et ladite inertie théorique (IT),
le procédé étant tel que, au cours de ladite correction d'inertie dudit balancier particulier, on effectue au moins une correction d'ébauche de façon à rapprocher l'inertie réelle dudit balancier particulier de ladite inertie théorique (IT) calculée et lors de laquelle correction d'ébauche on procède à l'élimination dudit balourd (ΔB) dudit balancier particulier pour son équilibrage, puis qu'on effectue au moins une nouvelle mesure de l'inertie dudit balancier particulier, et une correction finale d'inertie dudit balancier particulier pour l'ajuster à la valeur de ladite inertie théorique (IT) calculée,
et qu'on laisse inchangé le point de fixation dudit ensemble spiral particulier, lequel reste à une longueur active définie lors de sa production propre en tant que composant nu.

2. Procédé selon la revendication 1, **caractérisé en ce qu'**on crée lesdites zones où une quantité élémentaire de matière est ajoutée ou enlevée, alignées deux à deux de façon sensiblement symétrique par rapport à l'axe de pivotement dudit balancier particulier.

3. Procédé selon l'une des revendications précédentes, **caractérisé en ce qu'**on crée une pluralité de zones d'ajout ou d'enlèvement de matière, toutes alignées sur ledit axe de balourd (AB).

4. Procédé selon l'une des revendications précédentes, **caractérisé en ce qu'**on corrige localement l'inertie dudit balancier particulier vers le moins par enlèvement de matière, par ablation à l'aide d'une source d'énergie distante de la surface dudit balancier particulier.

5. Procédé selon l'une des revendications précédentes, **caractérisé en ce qu'**on corrige localement l'inertie dudit balancier particulier vers le plus par ajout de matière, par projection à distance de la surface dudit balancier particulier.

6. Procédé selon l'une des revendications précédentes, **caractérisé en ce qu'**on corrige localement l'inertie dudit balancier particulier vers le plus ou vers le moins par déplacement de matière, par repoussage ou par fusion localisée et déplacement de la phase liquide résultant de ladite fusion.

7. Procédé selon l'une des revendications précédentes, **caractérisé en ce qu'**on équipe ledit balancier particulier de masselottes de réglage en service, qui sont fixées sur ledit balancier particulier dans une position de butée ou d'indexation dans laquelle elles sont maintenues fixes pendant chaque opération de mesure d'inertie dudit balancier particulier et pendant chaque opération de correction d'inertie dudit balancier particulier.

8. Procédé selon la revendication précédente, **caractérisé en ce qu'**on immobilise chaque dite masselotte par un collage réversible pendant toute la durée dudit procédé, et jusqu'à l'insertion dudit balancier particulier dans un mouvement d'horlogerie.

9. Procédé selon l'une des revendications précédentes, **caractérisé en ce qu'**on corrige l'inertie dudit balancier particulier sur ledit balancier particulier isolé dudit ensemble spiral particulier.

10. Procédé selon l'une des revendications 1 à 8, **caractérisé en ce qu'**on corrige l'inertie dudit balancier particulier sur ledit balancier particulier assemblé avec ledit ensemble spiral particulier.

11. Procédé selon l'une des revendications précédentes, **caractérisé en ce qu'**on corrige l'inertie dudit balancier particulier pendant un pivotement imprimé à ce dernier par des moyens d'entraînement.

12. Procédé selon l'une des revendications précédentes, **caractérisé en ce qu'**on effectue la correction d'inertie dudit balancier particulier sous la forme de marquages anti-contrefaçon de traçabilité de produit qui sont symétriques deux à deux par rapport à l'axe de pivotement dudit balancier particulier.

13. Procédé selon l'une des revendications précédentes, **caractérisé en ce que**, au cours de la correction d'inertie dudit balancier particulier, on effectue sur ledit balancier particulier le marquage d'une référence de traçabilité de produit propre audit spiral particulier par rapport auquel ledit balancier particulier est ajusté.

14. Procédé selon la revendication 13, **caractérisé en ce qu'**on effectue ledit marquage de traçabilité de produit sous la forme d'un code-barres ou d'un code bidimensionnel matriciel à haute densité.

## Patentansprüche

1. Verfahren zum Einstellen einer Oszillationsfrequenz auf eine vorgegebene Oszillationsfrequenz einer sogenannten Uhrenregulierungsanordnung ohne Rückervorrichtung, die ausschließlich aus einer Unruh und einer Spiralfederanordnung gebildet ist, die mindestens eine Spirale mit mindestens einer Verwindung umfasst, wobei die einzigen beweglichen Organe der Regulierungsanordnung durch die Unruh und durch die Spiralfederanordnung gebildet sind, in dem:
- eine bestimmte Spiralfederanordnung aus einer Fertigung mit gegebenen Toleranzen zufällig entnommen wird;
- das Rückstellmoment der Spiralfederanordnung gemessen wird;
- eine bestimmte Unruh aus einer Fertigung mit gegebenen Toleranzen, in der die Trägheit jeder Unruh in Bezug auf ihre Drehachse gegebene Toleranzen in Bezug auf eine im Voraus definierte Trägheit besitzt, die größer als ein Trägheitsschwellenwert (IS) ist, zufällig entnommen wird;
- eine theoretische Trägheit (IT) der bestimmten Unruh als Funktion des gemessenen Rückstellmoments der entnommenen Spiralfeder berechnet wird, um die vorgegebene Oszillationsfrequenz zu erreichen;
- die tatsächliche Trägheit (IR) der bestimmten Unruh gemessen wird;
- durch direkte Einwirkung auf den Radkranz und/oder auf mindestens einen Arm, den die bestimmte Unruh aufweist, die Trägheit der bestimmten Unruh auf den berechneten theoretischen Trägheitswert (IT) korrigiert wird, um die vorgegebene Oszillationsfrequenz der Regulierungsanordnung, die durch die bestimmte Unruh und durch die bestimmte Spiralfederanordnung gebildet ist, zu erhalten;
- die Unwuchtachse (AB) und der Unwuchtwert (ΔB) der bestimmten Unruh und die Position der Unwucht an der Unwuchtachse (AB) bestimmt wird, um auf beiden Seiten der Drehachse (AP) der bestimmten Unruh Folgendes zu definieren:
- einen ersten Bereich (D1) auf Seiten der Unwucht,
- und einen zweiten Bereich (D2) auf der der Unwucht gegenüberliegenden Seite,
- die Trägheit der bestimmten Unruh symmetrisch in Bezug auf die Drehachse der bestimmten Unruh korrigiert wird durch Erzeugen mindestens eines Bereichs, in dem eine elementare Materialmenge hinzugefügt oder entfernt wird, wobei jeder Bereich, der sich in dem ersten Bereich (D1) befindet, ein sogenannter erster Bereich ist und einer ersten algebraischen Massenänderung (M1 i) entspricht, wobei jeder Bereich, der sich in dem zweiten Bereich (D2) befindet, eine sogenannter zweiter Bereich ist, der einer zweiten algebraischen Massenänderung (M2j) entspricht,
derart, dass:
- die Differenz zwischen:
- einerseits der Integrationssumme der Trägheitsmomente, die mit der Unwuchtachse (AB) der zweiten algebraischen Massenänderungen (M2j) in Beziehung stehen, und
- andererseits der Integrationssumme der Trägheitsmomente, die mit der Unwuchtachse (AB) der ersten algebraischen Massenänderungen (M1 i) in Beziehung stehen,
gleich dem Unwuchtwert (ΔB) ist,
und derart, dass:
- die Differenz zwischen:
- einerseits der Integrationssumme der Trägheitsmomente, bezogen auf eine Achse, die senkrecht zu der Unwuchtachse (AB) ist und die durch die Drehachse der zweiten algebraischen Massenänderungen (M2j) verläuft, und
- andererseits der Integrationssumme der Trägheitsmomente, bezogen auf eine Achse, die senkrecht zu der Unwuchtachse (AB) ist und die durch die Drehachse der ersten algebraischen Massenänderungen (M1 i) verläuft,
gleich 0 ist, und außerdem derart, dass:
- die Summe zwischen:
- einerseits der Integrationssumme der Trägheitsmomente, bezogen auf die Unwuchtachse (AB) der zweiten algebraischen Massenänderungen (M2j) und
- andererseits der Integrationssumme der Trägheitsmomente, bezogen auf die Unwuchtachse (AB) der ersten algebraischen Massenänderungen (M1 i),
gleich der Differenz zwischen der tatsächlichen Trägheit (IR) und der theoretischen Trägheit (IT) ist,
wobei das Verfahren derart ist, dass während der Korrektur der Trägheit der bestimmten Unruh mindestens eine Vorkorrektur ausgeführt wird, derart, dass die tatsächliche Trägheit der bestimmten Unruh an die berechnete theoretische Trägheit (IT) angenähert wird, und dass bei der Vorkorrektur die Beseitigung der Unwucht (ΔB) der bestimmten Unruh im Hinblick auf ihr Gleichgewicht vorgenommen wird, woraufhin mindestens eine neue Messung der Trägheit der bestimmten Unruh und eine endgültige Korrektur der Trägheit der bestimmten Unruh erfolgen, um sie auf den Wert der berechneten theoretischen Trägheit (IT) einzustellen,
und dass der Befestigungspunkt der bestimmten Spiralfederanordnung, die eine aktive Länge beibehält, die bei ihrer eigenen Fertigung als nackte Komponente definiert wird, unverändert gelassen wird.

2. Verfahren nach Anspruch 1, **dadurch gekennzeichnet, dass** die Bereiche, in denen eine elementare Materialmenge hinzugefügt oder entfernt wird, so gebildet werden, dass sie paarweise im Wesentlichen symmetrisch in Bezug auf die Drehachse der bestimmten Unruh ausgerichtet sind.

3. Verfahren nach einem der vorhergehenden Ansprüche, **dadurch gekennzeichnet, dass** eine Mehrzahl von Materialhinzufügungs- oder Materialentfernungsbereichen erzeugt werden, die alle auf die Unwuchtachse (AB) ausgerichtet sind.

4. Verfahren nach einem der vorhergehenden Ansprüche, **dadurch gekennzeichnet, dass** die Trägheit der bestimmten Unruh durch Entfernen von Material durch Abtragung mit Hilfe einer von der Oberfläche der bestimmten Unruh entfernten Energiequelle in Richtung Minimum korrigiert wird.

5. Verfahren nach einem der vorhergehenden Ansprüche, **dadurch gekennzeichnet, dass** die Trägheit der bestimmten Unruh durch Hinzufügung von Material durch Sprühen aus einem Abstand von der Oberfläche der bestimmten Unruh in Richtung Maximum lokal korrigiert wird.

6. Verfahren nach einem der vorhergehenden Ansprüche, **dadurch gekennzeichnet, dass** die Trägheit der bestimmten Unruh durch Verlagern von Material durch räumlich begrenztes Formdrücken oder Schmelzen und durch Verschieben der resultierenden flüssigen Phase der Schmelzung lokal in Richtung Maximum oder in Richtung Minimum korrigiert wird.

7. Verfahren nach einem der vorhergehenden Ansprüche, **dadurch gekennzeichnet, dass** die bestimmte Unruh für eine Regulierung im Betrieb mit Gewichtchen ausgestattet wird, die an der bestimmten Unruh in einer Anschlag- oder Indexierungsposition befestigt sind, in der sie während jedes Vorgangs des Messens der Trägheit der bestimmten Unruh und während jedes Vorgangs der Korrektur der Trägheit der bestimmten Unruh festgehalten werden.

8. Verfahren nach dem vorhergehenden Anspruch, **dadurch gekennzeichnet, dass** jedes Gewichtchen durch reversibles Kleben während der gesamten Dauer des Verfahrens und bis zum Einsetzen der bestimmten Unruh in ein Uhrwerk festgesetzt wird.

9. Verfahren nach einem der vorhergehenden Ansprüche, **dadurch gekennzeichnet, dass** die Trägheit der bestimmten Unruh an der bestimmten Unruh, die von der bestimmten Spiralfederanordnung isoliert ist, korrigiert wird.

10. Verfahren nach einem der Ansprüche 1 bis 8, **dadurch gekennzeichnet, dass** die Trägheit der bestimmten Unruh an der bestimmten Unruh, die mit der bestimmten Spiralfederanordnung zusammengefügt ist, korrigiert wird.

11. Verfahren nach einem der vorhergehenden Ansprüche, **dadurch gekennzeichnet, dass** die Trägheit der bestimmten Unruh während einer Drehung, die dieser Letzteren durch Antriebsmittel eingeprägt wird, korrigiert wird.

12. Verfahren nach einem der vorhergehenden Ansprüche, **dadurch gekennzeichnet, dass** die Korrektur der Trägheit der bestimmten Unruh in Form von Fälschungsverhinderungskennzeichnungen für die Verfolgbarkeit des Produkts, die paarweise symmetrisch in Bezug auf die Drehachse der bestimmten Unruh sind, ausgeführt wird.

13. Verfahren nach einem der vorhergehenden Ansprüche, **dadurch gekennzeichnet, dass** während der Korrektur der Trägheit der bestimmten Unruh an der bestimmten Unruh die Kennzeichnung einer Verfolgbarkeitsreferenz des Produkts, das zu der bestimmten Spirale gehört, in Bezug auf die die bestimmte Unruh eingestellt wird, durchgeführt wird.

14. Verfahren nach Anspruch 13, **dadurch gekennzeichnet, dass** die Kennzeichnung der Verfolgbarkeit des Produkts in Form eines Strichcodes oder eines zweidimensionalen Matrixcodes mit hoher Dichte durchgeführt wird.

## Claims

1. Method of adjusting the oscillation frequency of a timepiece regulating assembly with no index assembly, formed solely of a balance and a balance spring assembly including at least one balance spring with at least one twist, to a predetermined oscillation frequency, the only movable members of said regulating assembly being formed by said balance and by said balance spring assembly, wherein:
- a particular balance spring assembly is randomly taken from a production of toleranced products;
- the return torque of said balance spring assembly is measured;
- a particular balance is randomly taken from a production of toleranced products, wherein the inertia of each balance with respect to the pivot axis thereof is toleranced with respect to a predefined inertia, and is higher than an inertia threshold value (IS);
- a calculation is made of the theoretical inertia (IT) of said particular balance required to achieve said predetermined oscillation frequency, according to said measured return torque of said taken balance spring;
- the real inertia (IR) of said particular balance is measured;
- the inertia of said particular balance is corrected, by direct action on the felloe and/or on at least one arm of said particular balance, to said calculated theoretical inertia value (IT) in order to obtain said predetermined oscillation frequency for said regulating assembly formed by said particular balance, and by said particular balance spring assembly;
- the unbalance axis (AB) and the unbalance value (ΔB) of said particular balance and the position of said unbalance on said unbalance axis (AB) are determined so as to define, on either side of the pivot axis (AP) of said particular balance:
- a first domain (D1) on the side of said unbalance,
- and a second domain (D2) on the opposite side to said unbalance,
- the inertia of said particular balance is corrected symmetrically relative to the pivot axis of said particular balance, by creating at least one zone where an elementary quantity of material is added or removed, each said zone located in said first domain (D1) being said first zone and corresponding to a first algebraic variation of mass (M1 i), each said zone located in said second domain (D2) being said second zone and corresponding to a second algebraic variation of mass (M2j),
so that:
- the difference between:
- on the one hand, the integrated sum of the moments of inertia with respect to said unbalance axis (AB) of said second algebraic variations of mass (M2j), and
- on the other hand, the integrated sum of the moments of inertia with respect to said unbalance axis (AB) of said first algebraic variations of mass (M1 i),
is equal to said unbalance value (ΔB),
and so that:
- the difference between:
- on the one hand, the integrated sum of the moments of inertia with respect to an axis perpendicular to said unbalance axis (AB) and passing through said pivot axis of said second algebraic variations of mass (M2j), and
- on the other hand, the integrated sum of the moments of inertia with respect to an axis perpendicular to said unbalance axis (AB) and passing through said pivot axis of said first algebraic variations of mass (M1 i),
is equal to zero,
and also so that:
- the sum between:
- the integrated sum of the moments of inertia with respect to said unbalance axis (AB) of said second algebraic variations of mass (M2j), on the one hand, and
- on the other hand, the integrated sum of the moments of inertia with respect to said unbalance axis (AB) of said first algebraic variations of mass (M1 i),
is equal to the difference between said real inertia (IR) and said theoretical inertia (IT),
the method being such that, during said inertia correction of said particular balance, at least a rough correction is made to bring the real inertia of said particular balance closer to said calculated theoretical inertia (IT) and during said rough correction, said unbalance (ΔB) of said particular balance is eliminated for the poising thereof, then at least one more inertia measurement of said particular balance, and a final inertia correction of said particular balance are made to adjust said inertia to the value of said calculated theoretical inertia (IT),
and such that there is no change to the point of attachment of said particular balance spring assembly, which remains at an active length defined during the actual production of said balance spring as a simple component.

2. Method according to claim 1, **characterized in that** said zones are created where an elementary quantity of material is added or removed, aligned in substantially symmetrical pairs relative to the pivot axis of said particular balance.

3. Method according to any of the preceding claims, **characterized in that** a plurality of zones of added or removed material are created, all aligned on said unbalance axis (AB).

4. Method according to any of the preceding claims, **characterized in that** the inertia of said particular balance is locally corrected downwards by the removal of material, via ablation using an energy source remote from the surface of said particular balance.

5. Method according to any of the preceding claims, **characterized in that** the inertia of said particular balance is locally corrected upwards by the addition of material, by remote spraying the surface of said particular balance.

6. Method according to any of the preceding claims, **characterized in that** the inertia of said particular balance is locally corrected upwards or downwards by the displacement of material, via embossing or by the local melting and displacement of the liquid phase resulting from said melting.

7. Method according to any of the preceding claims, **characterized in that** said particular balance is provided with adjustment inertia blocks, which are secured to said particular balance in a stop or indexing position in which said inertia blocks are fixedly held during each inertia measurement of said particular balance and during each inertia correction of said particular balance.

8. Method according to the preceding claim, **characterized in that** each said inertia block is immobilised by reversible bonding for the entire duration of said method, and until said particular balance is inserted in a timepiece movement.

9. Method according to any of the preceding claims, **characterized in that** the inertia of said particular balance is corrected on said particular balance in isolation from said particular balance spring assembly.

10. Method according to any of claims 1 to 8, **characterized in that** the inertia of said particular balance is corrected on said particular balance when assembled to said particular balance spring assembly.

11. Method according to any of the preceding claims, **characterized in that** the inertia of said particular balance is corrected during a pivoting motion imparted thereto by a driving means.

12. Method according to any of the preceding claims, **characterized in that** the inertia of said particular balance is corrected in the form of product tracking anti-counterfeiting marks which are in symmetrical pairs relative to the pivot axis of said particular balance.

13. Method according to any of the preceding claims, **characterized in that** a product tracking reference mark, peculiar to said particular balance spring with respect to which said particular balance is adjusted, is made on said particular balance during correction of the inertia thereof.

14. Method according to claim 13, **characterized in that** said product tracking mark is made in the form of a barcode or a two-dimensional high density matrix code.
